# EUROPÄISCHE PATENTSCHRIFT

(11) **EP 0 999 441 B1**
(45) Veröffentlichungstag und Bekanntmachung des Hinweises auf die Patenterteilung: **10.12.2003**
(21) Anmeldenummer: 99119974.6
(22) Anmeldetag: 12.10.1999
(51) Int. Cl.: G01N 27/02

(54) **Sensor und Verfahren zum Messen der elektrischen Leitfähigkeit eines flüssigen Mediums**
Sensor and method for measuring electrical conductivity of a liquid
Capteur de conductibilité électrique de liquide et son procédé

(30) Priorität: 06.11.1998 DE 19851146
(43) Veröffentlichungstag der Anmeldung: 10.05.2000
(73) Patentinhaber: Endress + Hauser Conducta Gesellschaft für Mess- und Regeltechnik mbH + Co.KG., D-70839 Gerlingen (DE)
(72) Erfinder: Wieland, Christoph, 71683 Herrenberg-Kuppingen (DE); Zeller, Armin, 71254 Ditzingen (DE)
(74) Vertreter: Friz, Oliver

(56) Entgegenhaltungen:
- US-A- 3 603 873
- US-A- 3 806 798
- US-A- 3 987 362
- US-A- 5 341 102
- US-A- 5 666 058

## Beschreibung

Die vorliegende Erfindung betrifft einen induktiv arbeitenden Sensor und ein Verfahren zum Messen der elektrischen Leitfähigkeit eines flüssigen Mediums, mit den Merkmalen des Oberbegriffs des Anspruchs 1 und 5. Ein derartiger Sensor ist aus US-A-3987362 bekannt.

Derartige Sensoren weisen bspw. eine als Ringspule ausgebildete Erregerspule auf, die von einer Wechselspannung gespeist wird. Im Inneren der Erregerspule wird ein ringförmiges magnetisches Wechselfeld erzeugt. In der gleichen Ebene, in der auch die Erregerspule liegt, ist eine Empfangsspule angeordnet, die ebenfalls als eine Ringspule ausgebildet sein kann. Durch bewegliche Ionen in dem flüssigen Medium wird infolge des magnetischen Wechselfeldes in der Erregerspule ein ringförmiger Strom in dem zu messenden flüssigen Medium erzeugt, der wiederum in der Empfangsspule ein Ausgangssignal auslöst, dessen Stärke abhängig ist von der Beweglichkeit und der Konzentration der Ionen und mithin von der elektrischen Leitfähigkeit des flüssigen Mediums. Das Ausgangssignal ist üblicherweise als ein Induktionsstrom ausgebildet.

Derartige Sensoren werden vorzugsweise in der Lebensmitteloder der Arzneimittelindustrie zur Überwachung der Produktionsabläufe in Produktionsanlagen zur Herstellung von Lebensmitteln oder Arzneimitteln eingesetzt. Die Sensoren müssen stets ein genaues und zuverlässiges Ausgangssignal liefern, damit übermäßige Veränderungen der Leitfähigkeit des zu messenden Mediums rasch erkannt werden können und entsprechend reagiert werden kann, um eine Beeinträchtigung der herzustellenden Lebensmittel oder Arzneimittel verhindern zu können. Die entsprechenden Reaktionen auf eine Veränderung der Leitfähigkeit können entweder mittelbar durch das Produktionspersonal oder unmittelbar durch die Produktionsanlage veranlaßt werden.

Während des Einsatzes des Sensors kann dieser großen mechanischen und thermischen Belastungen ausgesetzt sein. Dadurch kann es in manchen Fällen zu Beschädigungen der Windungen der Erreger- oder der Empfangsspule kommen. Zwischen den beschädigten Windungen kann es zu Kriechströmen oder gar zu Kurzschlüssen kommen. Durch die Kriechströme zwischen den Windungen kann das Ausgangssignal verfälscht werden, ein Kurzschluß zwischen den Windungen macht den gesamten Sensor unbrauchbar.

Des weiteren kann es aufgrund von mechanischen oder thermischen Belastungen des Sensors zu einem Kurzschluß oder einem Bruch des Zuleitungskabels zu dem Sensor kommen. Es versteht sich, daß dadurch ebenfalls das Ausgangssignal verfälscht bzw. der gesamte Sensor unbrauchbar werden kann.

Das verfälschte Ausgangssignal wird von dem Produktionspersonal bzw. von der Produktionsanlage zunächst nicht als solches erkannt. Das Produktionspersonal bzw. die Produktionsanlage geht zunächst davon aus, daß das Ausgangssignal eine veränderte Leitfähigkeit des zu messenden Mediums detektiert hat und reagiert entsprechend, indem die Produktionsabläufe an den neuen Leitfähigkeitswert des Mediums angepasst werden. Erst nach einiger Zeit bzw. bei einem erheblich verfälschten Ausgangssignal wird bspw. mittels einer Plausibilitätsprüfung erkannt werden können, daß das Ausgangssignal verfälscht ist bzw. der Sensor defekt ist. Während dieser Zeit wird die Produktion üblicherweise fortgesetzt. Aufgrund des verfälschten Ausgangssignals kann es zu Veränderungen der Produktionsabläufe kommen, die während dieser Zeit zur Herstellung eines fehlerhaften Produkts führen können. Das kann dazu führen, daß die gesamte Charge der laufenden Produktion aus Sicherheitsgründen vernichtet werden muß, um eine Gesundheitsgefährdung der Käufer durch fehlerhafte Lebensmittel oder Arzneimittel mit Sicherheit auszuschließen. Das ist mit erheblichen Kosten verbunden. Nach dem Stand der Technik kann eine Beschädigung der Windungen der Erreger- oder der Empfangsspule bzw. des Zuleitungskabels zu dem Sensor nicht bzw. nur viel zu spät detektiert werden.

Der vorliegenden Erfindung liegt daher die Aufgabe zugrunde, einen Sensor der eingangs genannten Art dahingehend auszugestalten und weiterzubilden, daß er eine frühzeitige Detektion von Beschädigungen der Windungen der Erreger- oder der Empfangsspule bzw. des Zuleitungskabels, die zu Kriechströmen oder Kurzschlüssen führen, ermöglicht.

Diese Aufgabe wird gelöst durch einen Sensor mit den Merkmalen des Anspruchs 1 und ein Verfahren mit den Merkmalen des Anspruchs 5.

Erfindungsgemäß ist erkannt worden, daß Beschädigungen der Windungen der Erreger- oder Empfangsspule, falls Kriechströmen oder Kurzschlüssen auftreten, dazu führen, daß ein variables Signal am Eingang der Erregerspule drastisch ansteigt. Falls das Eingangssignal als eine Spannung ausgebildet ist, wird der Eingangsstrom am Eingang der Erregerspule infolge der Beschädigung des Sensors ansteigen. In diesem Fall werden die vorgesehenen Mittel den Eingangsstrom messen. Falls das Eingangssignal als ein Strom ausgebildet ist, wird die Eingangsspannung am Eingang der Erregerspule infolge der Beschädigung ansteigen. In diesem Fall werden die vorgesehenen Mittel die Eingangsspannung messen.

Ebenso verhält sich dieses Signal am Eingang der Erregerspule bei einer Beschädigung des Zuleitungskabels des Sensors, die zu Kriechströmen oder Kurzschlüssen führt. Das veränderliche Signal am Eingang der Erregerspule gibt also schnell und zuverlässig Aufschluß über die Funktionsfähigkeit des Sensors. Durch eine Überwachung dieses Signals am Eingang der Erregerspule können Beschädigungen der Windungen der Erreger- oder der Empfangsspule bzw. des Zuleitungskabels des Sensors, die zu Kriechströmen oder Kurzschlüssen führen, frühzeitig und zuverlässig detektiert werden.

Das Produktionspersonal kann auf einen solchen detektierten Sensordefekt ohne Zeitverzögerung reagieren. Bspw. kann zunächst die Produktion angehalten werden, um die Herstellung defekter Produkte zu verhindern. Der defekte Sensor kann gegen einen neuen ausgetauscht werden und die Produktion dann wieder hochgefahren werden. Zusätzlich könnte auch eine Kontrollmessung der Leitfähigkeit des zu messenden Mediums durchgeführt werden, um zu überprüfen, ob der Sensor tatsächlich defekt ist. Das Abschalten und das erneute Hochfahren der Produktion kann auch unmittelbar von der Steuerung der Produktionsanlage ausgeführt werden, ohne daß das Produktionspersonal darauf Einfluß hat.

Gemäß einer vorteilhaften Weiterbildung der Erfindung wird vorgeschlagen, daß der Sensor eine die Erregerspule mit einer Eingangsspannung speisende Spannungsquelle aufweist, und daß die Mittel zum Messen des variablen Signals den Eingangsstrom am Eingang der Erregerspule abgreifen.

Die Mittel zum Messen des Eingangsstroms weisen vorzugsweise einen Meßwiderstand auf und messen die über dem Meßwiderstand abfallende Spannung. Da sich die Spannung proportional zu dem Eingangsstrom verändert, kann der Eingangsstrom bei einem derart ausgebildeten Sensor, auf einfache Weise bestimmt werden.

Gemäß der vorliegenden Erfindung wird also vorgeschlagen, daß der Sensor einen Meßwertumformer zur Aufnahme des Ausgangssignals aufweist, der mit den Mitteln zum Messen des variablen Signals am Eingang der Erregerspule verbunden ist, daß die Mittel ein Meldesignal erzeugen, das abhängig ist von dem Meßwert des variablen Signals am Eingang der Erregerspule und daß die Mittel dem Meßwertumformer das Meldesignal zuführen. Auf diese Weise ist der Meßwertumformer während des Meßvorgangs stets über die Funktionsfähigkeit des Sensors im Bilde. Solange der Sensor funktioniert, liegt das Meldesignal innerhalb eines bestimmten Schwellenbereichs. Falls das überwachte variable Signal am Eingang der Erregerspule jedoch infolge einer Beschädigung stark ansteigt, erzeugen die Mittel zum Messen des variablen Signals ein entsprechendes Meldesignal, das außerhalb des Schwellenbereichs liegt. Der Meßwertumformer kann auf ein solches Meldesignal, aus dem sich für ihn die mangelnde Funktionsfähigkeit des Sensors ergibt, ohne Zeitverzögerung entsprechend reagieren. Erfindungsgemäß veranlaßt der Meßwertumformer die Ausgabe einer Meldung, falls das Meldesignal außerhalb eines bestimmten Schwellenbereichs liegt. Diese Meldung kann lediglich zur Information des Produktionspersonals dienen, das dann entsprechend reagieren kann. Die Meldung kann aber auch den Charakter einer Alarmmeldung haben, die automatisch bestimmte Reaktionen auslöst, bspw. ein Abschalten der Produktionsanlage. Als Reaktion kann der Meßwertumformer bspw. die gesamte Produktion anhalten, so daß es gar nicht erst zu einer Produktion fehlerhafter Produkte kommen kann.

Gemäß einer bevorzugten Ausführungsform der vorliegenden Erfindung wird vorgeschlagen, daß der Meßwertumformer das Ausgangssignal abhängig von der Größe des Meldesignals korrigiert. Falls die Beschädigung der Windungen der Erreger- oder Empfangsspule bzw. des Zuleitungskabels zu dem Sensor lediglich eine geringe Verfälschung des Ausgangssignals zur Folge hat, wird dies auch nur zu einer geringen Veränderung des variablen Signals am Eingang der Erregerspule führen. Auf eine solche Veränderung des variablen Signals kann der Meßwertumformer bspw. durch eine entsprechende Korrektur des Ausgangssignals reagieren. Dadurch kann weiterhin eine fehlerfreie Funktion des Sensors sichergestellt werden.

Ein bevorzugtes Ausführungsbeispiel der vorliegenden Erfindung wird im Folgenden anhand der Zeichnungen näher erläutert. Es zeigt:

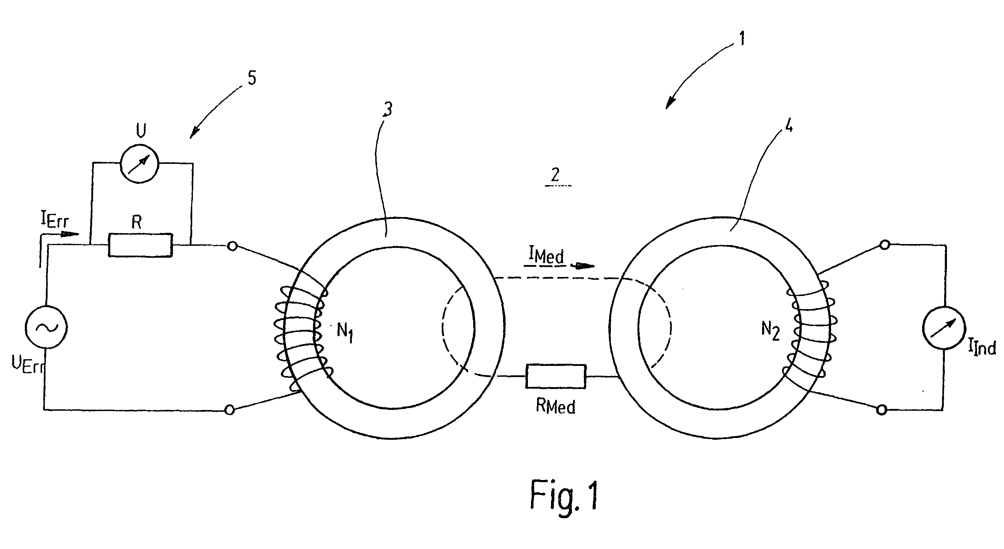

- Fig. 1: einen erfindungsgemäßen Sensor in einer bevorzugten Ausführungsform.

In Figur 1 ist ein erfindungsgemäßer induktiv arbeitender Sensor in seiner Gesamtheit mit dem Bezugszeichen 1 gekennzeichnet. Der Sensor 1 dient zum Messen der elektrischen Leitfähigkeit eines flüssigen Mediums 2. Der Sensor 1 weist eine als Ringspule ausgebildete Erregerspule 3 auf, die von einer Wechselspannung U_{Err} gespeist wird. Im Inneren der Erregerspule 3 wird ein ringförmiges magnetisches Wechselfeld erzeugt. Auf der gleichen Achse auf der auch die Erregerspule 3 liegt, ist eine Empfangsspule 4 angeordnet, die ebenfalls als eine Ringspule ausgebildet ist. Durch bewegliche Ionen in dem flüssigen Medium 2 wird infolge des magnetischen Wechselfeldes in der Erregerspule 3 ein ringförmiger Strom I_{Med} in dem zu messenden flüssigen Medium 2 erzeugt, der wiederum in der Empfangsspule 4 einen Induktionsstrom I_{Ind} auslöst. Die Stärke des Induktionsstroms I_{Ind} ist abhängig von der Beweglichkeit und der Konzentration der Ionen und mithin von der elektrischen Leitfähigkeit des flüssigen Mediums 2.

Der Sensor 1 weist Mittel zum Messen des Eingangsstroms I_{Err} auf, die in ihrer Gesamtheit mit dem Bezugszeichen 5 gekennzeichnet sind. Die Mittel 5 zum Messen des Eingangsstroms I_{Err} weisen einen Meßwiderstand R auf und messen die über dem Meßwiderstand R abfallende Spannung U. Durch die Überwachung des Eingangsstroms I_{Err} der Erregerspule 3 können Beschädigungen der Windungen der Erregerspule 3 oder der Empfangsspule 4 bzw. eines Zuleitungskabels (nicht dargestellt) des Sensors 1, die zu Kriechströmen oder Kurzschlüssen führen, frühzeitig und zuverlässig detektiert werden.

Der Sensor 1 weist einen Meßwertumformer (nicht dargestellt) zur Aufnahme des Induktionsstroms I_{Ind} auf, mit dem die Mittel 5 zum Messen des Eingangsstroms I_{Err} verbunden sind. Die Mittel 5 zum Messen des Eingangsstroms I_{Err} erzeugen ein Meldesignal, das abhängig ist von dem Meßwert des Eingangsstroms I_{Err} und das sie den Meßwertumformer zuführen. Der Meßwertumformer kann nun beispielsweise den Induktionsstrom I_{Ind} abhängig von der Größe des Meldesignals korrigieren, so dass trotz einer Beschädigung des Sensors 1 eine fehlerfreie Funktion des Sensors 1 gewährleistet ist. Der Meßwertumformer kann aber auch die Ausgabe einer Alarmmeldung veranlassen, falls das Meldesignal außerhalb eines bestimmten Schwellenbereiches liegt.

## Patentansprüche

1. Induktiv arbeitender Sensor (1) zum Messen der elektrischen Leitfähigkeit eines flüssigen Mediums (2), mit einer mittels eines Eingangssignals gespeisten Erregerspule (3) und einer mit dieser über das flüssige Medium (2) gekoppelten Empfangsspule (4), die ein Ausgangssignal (I_{Ind}) liefert, das ein Maß für die Leitfähigkeit des flüssigen Mediums (2) ist, und mit einem Meßwertumformer zur Aufnahme des Ausgangssignals (I_{Ind}) und mit Mitteln (5) zum Messen eines veränderlichen Signals am Eingang der Erregerspule (3), wobei der Meßwertumformer zur Aufnahme des Ausgangssignals (I_{Ind}) mit den Mitteln (5) zum Messen des variablen Signals verbunden ist, und diese Mittel (5) ein Meldesignal erzeugen, das abhängig ist von dem Meßwert des variablen Signals am Eingang der Erregerspule (3), und das Meldesignal dem Meßwertumformer zuführen, **dadurch gekennzeichnet, dass** der Meßwertumformer die Ausgabe einer Meldung veranlaßt, falls das Meldesignal außerhalb eines bestimmten Schwellenbereichs liegt.

2. Sensor (1) nach Anspruch 1, **dadurch gekennzeichnet, dass** der Sensor (1) eine die Erregerspule (3) mit einer Eingangsspannung (U_{Err}) speisende Spannungsquelle aufweist, und dass die Mittel (5) zum Messen des variablen Signals den Eingangsstrom (I_{Err}) am Eingang der Erregerspule (3) abgreifen.

3. Sensor (1) nach Anspruch 2, **dadurch gekennzeichnet, dass** die Mittel (5) zum Messen des Eingangsstroms (I_{Err}) einen Meßwiderstand (R) aufweisen und die über dem Meßwiderstand (R) abfallende Spannung (U) messen.

4. Sensor (1) nach Anspruch 1, 2 oder 3, **dadurch gekennzeichnet, dass** der Meßwertumformer das Ausgangssignal (I_{Ind}) abhängig von der Größe des Meldesignals korrigiert.

5. Verfahren zum Betreiben eines induktiv arbeitenden Sensors (1) zum Messen der elektrischen Leitfähigkeit eines flüssigen Mediums (2), mit einer mittels eines Eingangssignals gespeisten Erregerspule (3) und einer mit dieser über das flüssige Medium (2) gekoppelten Empfangsspule (4), die ein Ausgangssignal (I_{Ind}) liefert, das ein Maß für die Leitfähigkeit des flüssigen Mediums (2) ist, wobei am Eingang der Erregerspule (3) ein variables Signal gemessen wird, wobei ein Meldesignal erzeugt wird, das abhängig ist von dem Messwert des variablen Signals und das Meldesignal einem Messwertumformer des Sensors zugeführt wird, **dadurch gekennzeichnet, dass** anhand des Meldesignals das variable Signal überwacht wird, um Beschädigungen der Windungen der Erregeroder der Empfangsspule oder des Zuleitungskabels des Sensors zu detektieren.

## Claims

1. Inductively operating sensor (1) for measuring the electrical conductivity of a fluid medium (2), having an exciting coil (3) fed with an input signal and a receiving coil (4) coupled with said exciting coil via the fluid medium (2), said receiving coil producing an output signal (I_{Ind}) which is a measure of the conductivity of the fluid medium (2), and with a measurement transducer for receiving the output signal (I_{Ind}) and with means (5) for measuring a changing signal at the input of the exciting coil (3), whereby the measurement transducer for receiving the output signal (I_{Ind}) is linked to the means (5) for measuring the variable signal, and this means (5) generates an indicator signal dependent upon the measured value of the variable signal at the input of the exciting coil (3) and feeds the indicator signal to the measurement transducer, **characterised in that** the measurement transducer initiates the output of a message if the indicator signal lies outside a defined threshold range.

2. Sensor (1) according to Claim 1, **characterised in that** the sensor (1) has a voltage source feeding the exciting coil (3) with an input voltage (U_{Err}) and that the means (5) for measuring the variable signal taps the input current (I_{Err}) at the input of the exciting coil (3).

3. Sensor (1) according to Claim 2, **characterised in that** the means (5) for measuring the input current (I_{Err}) has a measuring resistor (R) and measures the voltage drop (U) across the measuring resistor (R).

4. Sensor (1) according to Claim 1, 2 or 3, **characterised in that** the measurement transducer corrects the output signal (I_{Ind}) independently of the size of the indicator signal.

5. Method for operating an inductively operating sensor (1) for measuring the electrical conductivity of a fluid medium (2) having an exciting coil (3) fed by means of an input signal and a receiving coil (4) coupled to said exciting coil via the fluid medium (2), said receiving coil (4) supplying an output signal (I_{Ind}) which is a measure of the conductivity of the fluid medium (2), whereby at the input of the exciting coil (3) a variable signal is measured, whereby an indicator signal is generated which is dependent upon the measured value of the variable signal and the indicator signal is fed to a measurement transducer of the sensor, **characterised in that** the variable signal is monitored by means of the indicator signal in order to detect damage to the windings of the exciting or receiving coil or to the sensor supply cable.

## Revendications

1. Capteur inductif (1) pour mesurer la conductibilité électrique d'un liquide (2), comportant une bobine excitatrice (3) alimentée au moyen d'un signal d'entrée et une bobine de réception (4) couplée à celle-ci par l'intermédiaire du liquide (2), laquelle délivre un signal de sortie (I_{Ind}) qui est une mesure de la conductibilité du liquide (2), ainsi qu'un convertisseur de valeurs mesurées pour la réception du signal de sortie (I_{Ind}) et des dispositifs (5) pour mesurer un signal variable à l'entrée de la bobine excitatrice (3), la convertisseur de valeurs mesurées pour la réception du signal de sortie (I_{Ind}) étant relié aux dispositifs (5) pour mesurer le signal variable et ces dispositifs (5) produisant un signal d'état qui dépend de la valeur mesurée du signal variable à l'entrée de la bobine excitatrice (3) et amenant le signal d'état au convertisseur de valeurs mesurées, **caractérisé en ce que** le convertisseur de valeurs mesurées déclenche l'émission d'un avertissement dans le cas où le signal d'état se situe en dehors d'une certaine plage-seuil.

2. Capteur (1) selon la revendication 1, **caractérisé en ce que** le capteur (1) présente une source de tension alimentant la bobine excitatrice (3) avec une tension d'entrée (U_{Err}) et **en ce que** les dispositifs (5), pour mesurer le signal variable, mesurent le courant d'entrée (I_{Err}) à l'entrée de la bobine excitatrice (3).

3. Capteur (1) selon la revendication 2, **caractérisé en ce que** les dispositifs (5), pour mesurer le courant d'entrée (I_{Err}), présentent une résistance de mesure (R) et mesurent la tension (U) chutant en passant par la résistance de mesure (R).

4. Capteur (1) selon la revendication 1, 2 ou 3, **caractérisé en ce que** le convertisseur de valeurs mesurées corrige le signal de sortie (I_{Ind}) en fonction de la grandeur du signal d'état.

5. Procédé d'utilisation d'un capteur inductif (1) pour mesurer la conductibilité électrique d'un liquide (2), comportant une bobine excitatrice (3) alimentée au moyen d'un signal d'entrée et une bobine de réception (4) couplée à celle-ci par l'intermédiaire du liquide (2), laquelle délivre un signal de sortie (I_{Ind}) qui est une mesure de la conductibilité du liquide (2), un signal variable étant mesuré à l'entrée de la bobine excitatrice (3), un signal d'état étant produit, lequel dépend de la valeur mesurée du signal variable, et le signal d'état étant amené à un convertisseur de valeurs mesurées du capteur, **caractérisé en ce que**, à l'appui du signal d'état, le signal variable est surveillé afin de détecter des dommages au niveau des spires de la bobine excitatrice ou de la bobine de réception ou du câble d'alimentation du capteur.
